# EUROPÄISCHE PATENTSCHRIFT

(11) **EP 2 808 071 B1**
(45) Veröffentlichungstag und Bekanntmachung des Hinweises auf die Patenterteilung: **07.08.2019**
(21) Anmeldenummer: 14166198.3
(22) Anmeldetag: 28.04.2014
(51) Int. Cl.: B01D 35/147, B01D 35/16

(54) **Filtereinrichtung, insbesondere für ein Kraftfahrzeug**
Filter device, in particular for an automotive car
Dispositif de filtre, en particulier pour un véhicule automobile

(30) Priorität: 29.05.2013 DE 102013210065
(43) Veröffentlichungstag der Anmeldung: 03.12.2014
(73) Patentinhaber: Mahle International GmbH, 70376 Stuttgart (DE)
(72) Erfinder: Gebler, Claude Frédéric, 70469 Stuttgart (DE); Preißinger, Markus, 71229 Leonberg (DE); Ruffet, Valentin, 73760 Ostfildern (DE)
(74) Vertreter: BRP Renaud & Partner mbB Rechtsanwälte Patentanwälte Steuerberater

(56) Entgegenhaltungen:
- EP-A1- 0 839 563
- EP-A2- 1 110 590
- WO-A1-01/07819

## Beschreibung

Die vorliegende Erfindung betrifft eine Filtereinrichtung, insbesondere für ein Kraftfahrzeug.

Filtereinrichtungen kommen häufig als Ölfilter in Kraftfahrzeugen zum Einsatz, in welchen ihnen eine Ölpflegefunktion für das bspw. in einer Brennkraftmaschine des Kraftfahrzeugs verwendete Öl zukommt. Derartige Filtereinrichtungen weisen in bekannter Weise ein Ringfilterelement auf, das bspw. von außen nach innen durchströmt ist, so dass ein räumlicher Bereich innerhalb des Ringfilterelements eine Reinseite der Filtereinrichtung und ein außerhalb des Ringfilterelements angeordneter räumlicher Bereich eine Rohseite der Filtereinrichtung ausbildet.

Eine solche Filtereinrichtung weist üblicherweise auch ein Filtergehäuse auf, an welchem ein Gehäusedeckel befestigbar ist. Das Ringfilter ist dann in den am Filtergehäuse befestigten Gehäusedeckel einsetzbar, so dass der Ringfilter in einem in dem Filtergehäuse montierten Zustand des Gehäusedeckels die Rohseite von der Reinseite der Filtereinrichtung trennt.

Zur Filterung eines Fluids, bspw. eines Öls (wenn die Filtereinrichtung ein Ölfilter ist) kann nun das Filtergehäuse eine mit der Rohseite in Fluidverbindung stehende Zuführungsöffnung und eine mit der Reinseite in Fluidverbindung stehende Abführungsöffnung aufweisen. Das zu filternde Fluid fließt dann über die Zuführungsöffnung in die Reinseite der Filtereinrichtung, durchströmt dann das Ringfilterelement von der Rohseite zur Reinseite der Filtereinrichtung, und verlässt die Reinseite dann wieder durch die Abführungsöffnung.

In der Filtereinrichtung kann nun sowohl in der Rohseite sog. Schmutzöl als auch in der Reinseite mittels des Ringfilters gefiltertes Öl zurückbleiben. Beim Wechseln des Filterelements kann beim Entnehmen des Deckels in unkontrollierter Weise sowohl Schmutzöl als auch gefiltertes Öl aus der Filtereinrichtung nach außen treten. Bei der Verwendung von Filtereinrichtungen in Kraftfahrzeugen zur Filterung von Motoröl kann es zudem vorkommen, dass der Öldruck auf der Rohseite des Filterelements auf unerwünschte Weise zu stark ansteigt, da das Öl in einem Zeitraum unmittelbar nach dem Start der Brennkraftmaschine des Kraftfahrzeugs relativ zähflüssig sein kann. Ein zu hoher Öldruck auf der Rohseite der Filtereinrichtung kann jedoch unter Umständen, insbesondere bei Überschreiten eines maximal zulässigen, vorbestimmten Schwelldrucks zu einer Beschädigung der Filtereinrichtung, insbesondere des in der Filtereinrichtung verbauten Filterelements, führen.

Die DE 10 2010 063 822 A1 beschreibt ein Flüssigkeitsfilter mit einem Ventilelement, welches in einer geöffneten Position eine Rohseite mit einer Reinseite des Flüssigkeitsfilters verbindet. Das Ventilelement ist am Gehäuse des Flüssigkeitsfilters verstellbar gelagert.

Die DE 37 38 718 A1 beschreibt ein Ölfilter mit einer Ablassschraube. Das Ölfilter umfasst ferner ein Gehäuse, welches durch einen Filterkörper in einen Schmutzölraum und einen Reinölraum unterteilt ist. Der äußere der beiden Räume steht dauernd mit einem durch die Ablassschraube verschlossenen Bodenraum des Gehäuses in Verbindung. Diese Verbindung wird durch Löcher in einer unterhalb des Filterkörpers liegenden Querwand gebildet, die eine zum inneren Raum führende, mit der Ablassschraube fluchtende weitere Öffnung aufweist. Diese Öffnung ist im Betrieb des Filters durch die Stirnfläche des Schafts der Ablassschraube verschlossen.

Die EP 0 839 563 A1 beschreibt eine Filtereinrichtung mit einem Verschlusselement, welches einen Bypass-Kanal aufweist.

Es ist eine Aufgabe der vorliegenden Erfindung, eine verbesserte Ausführungsform für eine Filtereinrichtung bereitzustellen, bei welcher insbesondere das unerwünschte Überschreiten eines maximal zulässigen Öldrucks auf der Rohseite der Filtereinrichtung vermieden wird.

Oben genannte Aufgabe wird gelöst durch den Gegenstand des unabhängigen Anspruchs 1. Bevorzugte Ausführungsformen sind Gegenstand der abhängigen Ansprüche.

Die vorliegende Erfindung beruht auf dem allgemeinen Gedanken, für die Filtereinrichtung ein Verschlusselement sowohl zum Verschließen einer Gehäusedeckel-Leerlauföffnung als auch einer Filterelement-Leerlauföffnung bereitzustellen, wobei am Verschlusselement ein Bypass-Kanal mit einem Ventilelement vorgesehen ist. Das Ventilelement ist zwischen einer geschlossenen Position, in welcher es den Bypass-Kanal fluiddicht verschließt, und einer geöffneten Position, in welcher es den Bypass-Kanal zum Durchströmen mit einem Fluid freigibt, verstellbar. Mittels eines solchen, mit einem Ventilelement versehenen Bypass-Kanals kann in der Filtereinrichtung eine Überdruckfunktion derart realisiert werden, dass bei Überschreiten eines maximal zulässigen Fluid- bzw. Öldrucks in der Rohseite der Filtereinrichtung das Ventilelement öffnet, also in die geöffnete Position verstellt wird. In dieser Position wird der Bypass-Kanal freigegeben, so dass das Fluid bzw. Öl direkt zur Reinseite der Filtereinrichtung abströmen kann. Somit kann der Fluiddruck in der Rohseite der Filtereinrichtung reduziert werden, bis er wieder unterhalb eines kritischen Schwelldrucks liegt. Das erfindungsgemäße Verschlusselement mit integriertem Bypass-Kanal, in welchem ein Ventilelement vorgesehen ist, wirkt also einer fluid- bzw. öldruckbedingte Beschädigung oder gar Zerstörung der Filtereinrichtung und ihrer Komponenten, insbesondere des im Filtergehäuse verbauten Filterelements, entgegen.

Zusätzlich zu der vorangehend vorgestellten Überdruck-Schutzfunktion, welche mittels des erfindungsgemäßen Verschlusselements realisiert ist, ermöglicht das Verschlusselement eine gleichzeitige Entleerung sowohl der Reinseite als auch der Rohseite der Filtereinrichtung von gefiltertem bzw. Schmutzöl. Hierzu muss das Verschlusselement lediglich vom Gehäusedeckel der Filtereinrichtung entfernt werden, so dass dann sowohl die Rohseite als auch die Reinseite der Filtereinrichtung nach außen geöffnet ist. Dann kann das dort angesammelte Schmutzöl bzw. ungefilterte Öl aus der Filtereinrichtung abfließen.

Die Durchführung eines solchen Entleerungsvorgangs bietet sich insbesondere dann an, wenn das Filterelement ausgewechselt werden soll. Vor dem eigentlichen Austausch des Filterelements kann sowohl die Roh- als auch die Reinseite der erfindungsgemäßen Filtereinrichtung wie oben beschrieben auf einfache Weise entleert werden, so dass dann beim anschließenden Auswechseln des Filterelements nicht die Gefahr von Verschmutzungen durch auslaufendes Schmutzöl bzw. gefiltertes Öl besteht. Nach Abschluss des Entleerungsvorgangs kann das Verschlusselement wieder am Gehäusedeckel angebracht werden und der ursprüngliche Betriebszustand der Filtereinrichtung wiederhergestellt werden. Ein aufwändiges separates Öffnen der Roh- und Reinseite, beispielsweise mittels zweier separater Verschlusselemente, entfällt in der erfindungsgemäßen Filtereinrichtung.

Die erfindungsgemäße Filtereinrichtung ermöglicht also durch die Integration des Bypass-Ventils in das Verschlusselement der Filtereinrichtung eine technisch einfach zu realisierende und somit kostengünstige Realisierung einer Überdruckventils für die Filtereinrichtung.

In einer bevorzugten Ausführungsform kann der Verschlusselement-Hauptkörper des Verschlusselements als Hohlkörper ausgebildet sein, in welchem der Bypass-Kanal vorgesehen ist. Das Ventilelement ist dabei zum Verstellen zwischen der geöffneten und der geschlossenen Position entlang einer axialen Richtung des Hohlkörpers in diesem verschiebbar. Dies ermöglicht eine technisch einfach und zugleich platzsparende Realisierung des Bypass-Kanals innerhalb des Verschlusselements. Zudem lässt sich mittels der Ausbildung des Verschlusselements in der Art eines Hohlkörpers das Gewicht des Verschlusselements gering halten.

Gemäß einer vorteilhaften Weiterbildung kann nun im Hohlkörper eine erste Durchgangsöffnung vorgesehen sein, welche in dem am Gehäusedeckel angebrachten Zustand des Verschlusselements den Bypass-Kanal fluidisch mit der Reinseite verbindet. Entsprechend ist im Hohlkörper auch eine weitere, zweite Durchgangsöffnung vorgesehen, welche die Rohseite fluidisch mit dem Bypass-Kanal verbindet. Mittels der Bereitstellung zweier solcher Durchgangsöffnungen im Hohlkörper lässt sich auf einfache Weise die zur Realisierung eines Überdruckventils erforderliche fluidische Verbindung der Rohseite mit der Reinseite über den Bypass-Kanal des Verschlusselements realisieren.

Besonders zweckmäßig kann der Hohlkörper als Hohlzylinder ausgebildet sein, wobei die erste Durchgangsöffnung an einem ersten axialen Ende des Hohlzylinders vorgesehen ist. Dabei weist der Hohlzylinder eine Zylinderwand auf, in welcher die zweite Durchgangsöffnung vorgesehen ist. Das den Hohlzylinder durchströmende Fluid kann somit radial nach innen in den Bypass-Kanal einströmen, diesen entlang der axialen Richtung durchströmen und in axialer Richtung wieder in die Reinseite der Filtereinrichtung verlassen.

Es ist in diesem Zusammenhang klar, dass in Varianten auch andere, von einem Hohlzylinder abweichende Geometrien vorstellbar sind, welche der Hohlkörper aufweisen kann. Beispielsweise kann daran gedacht sein, dass sich der Hohlzylinder entlang der axialen Richtung konisch verjüngt. Auch kann vorgesehen sein, dass der Hohlzylinder entlang der axialen Richtung eine oder mehrere radiale Stufen aufweist.

Das Filterelement weist einen ringförmigen Filterkörper auf, welcher an seinen beiden axialen Enden mittels einer ersten und einer zweiten Endscheibe verschlossen ist, wobei die erste Endscheibe eine konzentrisch in dieser angeordnete Filterelement-Leerlauföffnung aufweist, so dass die erste Endscheibe ringförmig ausgebildet ist. An der ersten Endscheibe ist ein von dieser abstehendes Filterelement-Befestigungselement vorgesehen, welches in einem am Gehäusedeckel befestigten Zustand in ein am Gehäusedeckel vorgesehenes komplementäres und nach innen abstehendes Gehäusedeckel-Befestigungselement eingreift. Dies ermöglicht eine einfache Demontage des Filterelements, beispielsweise zu Wartungs- oder Austauschzwecken.

Vorzugsweise kann der Gehäusedeckel einen die Gehäusedeckel-Leerlauföffnung einfassenden und nach innen abstehenden Leerlauföffnungskragen aufweisen. Am Verschlusselement-Hauptkörper ist eine erste Radial-Dichtung vorgesehen, mittels welcher das Verschlusselement in dem an dem Gehäusedeckel angebrachten Zustand in der Filterelement-Leerlauföffnung die Rohseite gegen die Reinseite abdichtet. Die erste Endscheibe kann entsprechend einen Öffnungskragen mit einer Kragen-Innenfläche aufweisen, in welchen das Verschlusselement in dem am Gehäusedeckel angebrachten Zustand im Bereich zwischen der ersten und zweiten Durchgangsöffnung axial zur Ausbildung der ersten Radial-Dichtung eingreift. Die in der Zylinderwand vorgesehene zweite Durchgangsöffnung ist dabei in dem am Gehäusedeckel befestigten Zustand des Verschlusselements in axialer Richtung zwischen dem Öffnungskragen und dem Leerlauföffnungskragen angeordnet. Auf diese Weise kann auch der Bereich zwischen Öffnungskragen und Leerlauföffnungskragen für eine Fluidverbindung zwischen der Rohseite und dem Bypasskanal genutzt werden, was den für die Realisierung des Verschlusselements benötigten Bauraum reduziert. Die an der Zylinderwand vorgesehene zweite Durchgangsöffnung kann eine oder mehrere, separate Unter-Durchgangsöffnungen aufweisen, die in der Art von Fenstern in der Zylinderwand vorgesehen sind.

Zum Zwecke der besonders einfachen technischen Realisierung der ersten Radial-Dichtung kann diese ein auf einer Außenumfangsfläche des Verschlusselements in einer ersten Ringnut angeordnetes erstes ringförmiges Dichtungselement aufweisen, mittels welchem die erste Radial-Dichtung in dem an dem Gehäusedeckel angebrachten Zustand des Verschlusselements in der Filterelement-Leerlauföffnung die Rohseite gegen die Reinseite abdichtet. Dies ermöglicht eine besonders einfache und somit kostengünstige Herstellung der erfindungsgemäßen Filtereinrichtung. Alternativ dazu kann in einer ebenfalls bevorzugten Ausführungsform der Öffnungskragen des Filterelements als Dichtlippe ausgebildet sein, was die Bereitstellung einer Ringnut und eines Dichtungselements in der Art eines Dichtungsrings am Verschlusselement überflüssig macht. Gemäß einer weiteren Alternative kann an der ersten Endscheibe auch ein ringförmiges Vlieselement angebracht, insbesondere angeschweißt, sein, an welchem die Außenumfangsfläche des Verschlusselements in dem an dem Gehäusedeckel angebrachten Zustand zur Ausbildung der ersten Radial-Dichtung anliegt.

Um nun den Hohlzylinder des Verschlusselement-Hauptkörpers in der geschlossenen Position des Ventilelements auf einfache Weise zu verschließen, kann das Ventilelement gemäß einer besonders bevorzugten Ausführungsform stempelartig mit einem sich entlang einer axialen Richtung erstreckenden Ventilelement-Basiskörper ausgebildet sein. Der Ventilelement-Basiskörper ist dann in der Art eines Kolbens ausgebildet. Bei einer solchen kolben- bzw. stempelartigen Ausbildung kann der Ventilelement-Basiskörper entlang der axialen Richtung in einen radial nach außen vorstehenden ersten axialen Endabschnitt übergehen, welcher die erste Durchgangsöffnung im geschlossenen Zustand des Ventilelements fluiddicht verschließt. Dies bedeutet, dass der erste axiale Endabschnitt in der Art eines verstellbaren Deckels wirkt und somit den Bypass-Kanal gegen die Reinseite der Filtereinrichtung abdichtet. Durch ein Verschieben des Ventilelements entlang der axialen Richtung wird der erste axiale Endabschnitt über die erste Durchgangsöffnung hinaus in Richtung der Reinseite des Filterelements, also axial von der Leerlauföffnung weg, verschoben, so dass die erste Durchgangsöffnung wenigstens teilweise freigegeben ist. Das Ventilelement befindet sich dann in der geöffneten Position.

Um mittels des Ventilelements eine Sicherheitsfunktion in der Art eines Überdruckventils zu implementieren bzw. realisieren, kann im Hohlkörper ein Federelement vorgesehen sein, welches das Ventilelement zur geschlossenen Position hin vorspannt. Die zur Vorspannung vom Federelement erzeugte Vorspannkraft kann dabei durch geeignete Auslegung des Federelements, insbesondere hinsichtlich dessen Federkonstante, derart festgelegt werden, dass zum Bewegen des Ventilelements in die geöffnete Position das in der Rohseite angesammelte Öl einen vorbestimmten Schwelldruck überschreiten muss. In diesem Fall hebt die auf das Federelement wirkende Gegenkraft die Vorspannkraft auf, so dass sich das Ventilelement zur geöffneten Position hin bewegt. Im Falle, dass in der Rohseite der vorbestimmte Schwell-Fluiddruck nicht überschritten wird, bleibt das Ventilelement hingegen in der geschlossenen Position angeordnet.

Zum Zwecke einer besonders einfachen technischen Realisierung der Vorspannung des Ventilelements mittels des Federelements kann im Hohlkörper ein axialer Anschlag vorgesehen sein, an welchem sich das Federelement zur Vorspannung des Ventilelements einenends abstützt.

Zur besonders einfachen Anbringung des Ventilelements im Hohlkörper kann der Ventilelement-Basiskörper entgegen der axialen Richtung in einen zweiten axialen Endabschnitt übergehen, in dessen Bereich ein Rastelement vorgesehen ist, welches mit einem im Hohlkörper vorgesehenen und entlang der axialen Richtung beweglichen Abstützungsring eine Einrasteinrichtung zum lösbaren Fixieren des Ventilelements am Federelement ausbildet. Das Federelement stützt sich dabei zur Vorspannung des Ventilelements einenends am axialen Anschlag und anderenends am Abstützungsring ab. Der Abstützungsring ist also zusammen mit dem Ventilelement entlang der axialen Richtung A beweglich im Bypass-Kanal angeordnet. Zum Abdichten des Bypass-Kanals 31 nach außen gegen die Umgebung kann dieser mittels eines zylinderartig ausgebildeten Bypasskanal-Verschlusselements verschlossen werden.

Vorzugsweise kann die erste Radial-Dichtung eine kreiszylindrische radiale Dichtkontur aufweisen, mittels welcher die erste Radial-Dichtung in dem an dem Gehäusedeckel angebrachten Zustand des Verschlusselements in der Filterelement-Leerlauföffnung die Rohseite gegen die Reinseite abdichtet. Dies ermöglicht eine besonders einfache und damit kostengünstige Herstellung der erfindungsgemäßen Filtereinrichtung.

In einer weiterbildenden Ausführungsform kann das Verschlusselement eine zweite Radial-Dichtung aufweisen, mittels welcher das Verschlusselement in dem an dem Gehäusedeckel angebrachten Zustand in der Gehäusedeckel-Leerlauföffnung einen Gehäuse-Innenraum nach außen abdichtet. Mittels der zweiten Radial-Dichtung, welche zusätzlich zu der ersten Radialdichtung am Verschlusselement angeordnet ist, kann also eine zusätzliche Abdichtung des Gehäuse-Innenraums der Filtereinrichtung nach außen erzielt werden.

Um die Dichtwirkung der zweiten Radial-Dichtung weiter zu verbessern, kann in einer besonders bevorzugten Ausführungsform das Verschlusselement ein auf der Außenumfangsfläche des Verschlusselements in einer zweiten Ringnut angeordnetes zweites ringförmiges Dichtungselement aufweisen, mittels welchem die zweite Radial-Dichtung in dem an dem Gehäusedeckel angebrachten Zustand in der Gehäusedeckel-Leerlauföffnung den Gehäuse-Innenraum des Gehäuses nach außen abdichtet.

Um das Verschlusselement auf einfache Weise an dem Gehäusedeckel anbringen und dieses bei Bedarf auch wieder von diesem entfernen zu können, kann in einer weiterbildenden Ausführungsform daran gedacht sein, das Verschlusselement als Verschlussschraube mit einem Außengewinde auszubilden, welche zum Verschließen der beiden Leerlauföffnungen in ein an dem Gehäusedeckel vorgesehenes und zu dem Außengewinde komplementäres Innengewinde einschraubbar ist.

In einer technisch besonders einfach zu realisierenden Ausführungsform können die Gehäusedeckel-Leerlauföffnung und die Filterelement-Leerlauföffnung jeweils kreisförmig ausgebildet sein und einen ersten bzw. zweiten Leerlauf-Öffnungsdurchmesser aufweisen, wobei der erste Leerlauf-Öffnungsdurchmesser größer als der zweite Leerlauf-Öffnungsdurchmesser ist.

In einer ebenfalls einfach und damit kostengünstig herzustellenden Ausführungsform können die Gehäusedeckel-Leerlauföffnung und die Filterelement-Leerlauföffnung in dem an dem Gehäusedeckel angebrachten Zustand des Filterelements konzentrisch zueinander angeordnet sein.

Vorzugsweise kann die Filterelement-Leerlauföffnung durch einen nach innen in Richtung der zweiten Endscheibe abstehenden Öffnungskragen mit einer Kragen-Innenfläche eingefasst sein, welche sich für eine radiale Kontaktierung mit einem ringförmigen Dichtungs-element eignet. Auf diese Weise kann eine verbesserte Dichtwirkung erzielt werden.

Zur Erzielung einer besonders hohen Dichtwirkung kann der Öffnungskragen in einer bevorzugten Ausführungsform als Dichtlippe ausgebildet sein. Alternativ dazu kann in einer besonders einfach und damit kostengünstig herstellbaren Ausführungsform an der ersten Endscheibe ein ringförmiges Vlieselement angebracht, insbesondere angeschweißt, sein, welches sich für eine radiale Kontaktierung mit einem ringförmigen Dichtungselement eignet.

Die Erfindung betrifft schließlich ein Kraftfahrzeug mit einer Filtereinrichtung mit einem oder mehreren der vorangehend genannten Merkmale.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert. Dabei zeigen, jeweils schematisch:
- Fig. 1: ein Ausführungsbeispiel einer erfindungsgemäßen Filtereinrichtung,
- Fig.2: eine erste Variante des Beispiels der Figur 1,
- Fig.3: eine zweite Variante des Beispiels der Figur 1.

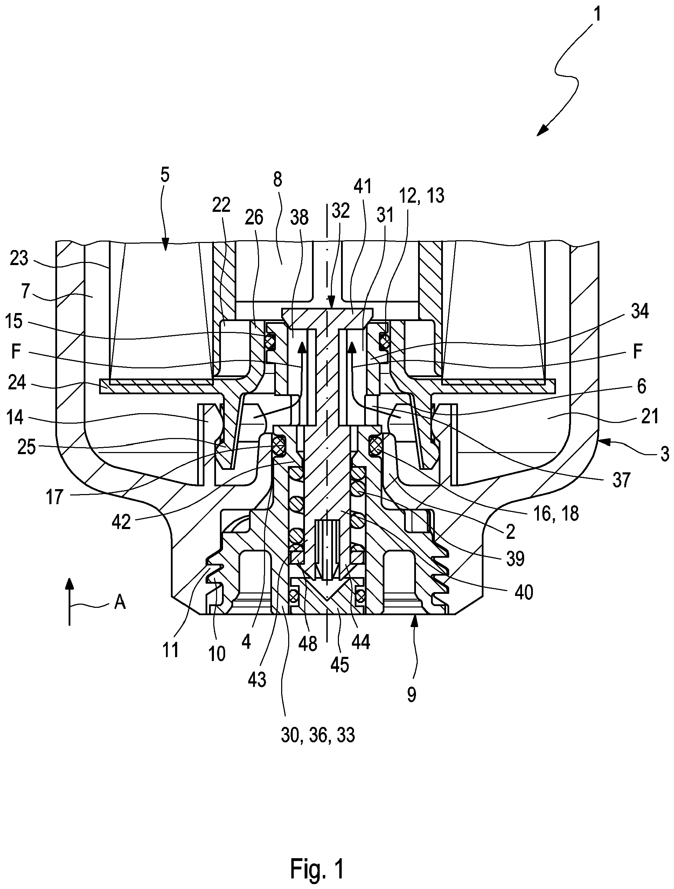

In der Figur 1 ist eine erfindungsgemäße Filtereinrichtung in einem Längsschnitt und teilweise dargestellt und mit 1 bezeichnet. Die Filtereinrichtung 1 weist einen Gehäusedeckel 3 auf, welcher an einem in der Fig. 1 nicht gezeigten Filtergehäuse der Filtereinrichtung 1 befestigbar ist.

Der Gehäusedeckel 3 weist eine Gehäusedeckel-Leerlauföffnung 4 auf. Mit dem Gehäusedeckel 3 ist ein Filterelement 5 verbunden, welches wiederum eine Filterelement-Leerlauföffnung 6 aufweist und in dem in der Fig. 1 gezeigten (in dem Filtergehäuse 2 montierten Zustand) eine Rohseite 7 von einer Reinseite 8 trennt. Am Gehäusedeckel 3 ist ein Verschlusselement 9 mit einem Verschlusselement-Hauptkörper 30 angebracht, welches sowohl die Gehäusedeckel-Leerlauföffnung 4 als auch die Filterelement-Leerlauföffnung 6 verschließt. Das Verschlusselement 9 weist ein Verschlusselement-Hauptkörper 30 auf und kann dabei wie in der Fig.1 gezeigt als Verschlussschraube mit einem Außengewinde 10 ausgebildet sein, welche zum Verschließen der beiden Leerlauföffnungen 4, 6 in ein am Gehäusedeckel 3 vorgesehenes und zum Außengewinde 10 komplementäres Innengewinde 11 eingeschraubt ist.

Das Verschlusselement 9 verschließt sowohl die Gehäusedeckel-Leerlauföffnung 4 als auch die Filterelement-Leerlauföffnung 6. Zum Verschließen der Filterelement-Leerlauföffnung 6 weist das Verschlusselement 9 eine erste Radial-Dichtung 12 auf, mittels welcher das Verschlusselement 9 die Rohseite 7 gegen die Reinseite 8 abdichtet. Eine besonders gute Dichtwirkung der ersten Radial-Dichtung 12 kann dabei mittels eines ersten ringförmigen Dichtungselements 13 erzielt werden, welches auf einer Außenumfangsfläche des Verschlusselements 9 in einer ersten Ringnut 15 angeordnet ist.

Der Verschlusselement-Hauptkörper 30 des Verschlusselements 9 kann wie in der Fig. 1 gezeigt als Hohlkörper 36 ausgebildet sein, in welchem ein Bypass-Kanal 31 vorgesehen ist. Der Bypass-Kanal 31 verbindet in einem am Gehäusedeckel 3 montierten Zustand des Verschlusselements 9 die Rohseite 7 der Filtereinrichtung 1 fluidisch mit dessen Reinseite 8. Im Bypass-Kanal 31 ist ein Ventilelement 32 vorgesehen, welches zwischen einer geschlossenen und einer geöffneten Position verstellbar ist. In der in der Figur 1 gezeigten geschlossenen Position verschließt das Ventilelement 32 den Bypass-Kanal 31 fluiddicht, wohingegen es den Bypass-Kanal 31 in der geöffneten Position zum Durchströmen mit einem Fluid freigibt. Ein solches Fluid kann ein Öl sein, wenn die Filtereinrichtung 1 als Ölfilter in einem Kraftfahrzeug zum Einsatz kommt.

Das Ventilelement 32 ist zum Verstellen zwischen der geöffneten und der geschlossenen Position entlang einer axialen Richtung A des Hohlkörpers 36 verschiebbar. Im Hohlkörper 36 ist eine erste Durchgangsöffnung 38 vorgesehen, welche in dem in der Fig. 1 gezeigten, am Gehäusedeckel 3 angebrachten Zustand des Verschlusselements 9 den Bypass-Kanal 31 fluidisch mit der Reinseite 8 verbindet. Der Hohlkörper 36 kann wie in der Fig. 1 gezeigt als Hohlzylinder 33 ausgebildet sein. In diesem Fall ist die erste Durchgangs-öffnung 38 an einem ersten axialen Ende des Hohlzylinders 33 vorgesehen, welche im montierten Zustand der Verschlussschraube 9 dem Filterelement 5 zugewandt ist. Der in der Fig. 1 dargestellte Hohlzylinder 33 umfasst eine Zylinderwand 34, in welcher eine zweite Durchgangsöffnung 37 vorgesehen ist. Diese zweite Durchgangsöffnung 37 verbindet die Rohseite 7 fluidisch mit dem Bypass-Kanal 31. In Varianten können selbstverständlich mehrere solche Durchgangsöffnungen

37 in der Art von Durchgangsfenstern in der Zylinderwand 34 vorgesehen sein. In einer weiteren Variante kann sich die Zylinderwand 34 auch konisch verjüngen.

In dem in der Fig. 1 gezeigten Zustand befindet sich das Ventilelement 32 in der geschlossenen Position, in welcher die mittels des Bypass-Kanals 31 hergestellte Fluidverbindung zwischen der Rohseite 7 und der Reinseite 8 unterbrochen ist. Zur Verdeutlichung ist der Strömungspfad des den Bypass-Kanal 31 durchströmenden Fluids bzw. Öls mittels zweier mit dem Bezugszeichen F bezeichneter Pfeile dargestellt.

Das in der Fig. 1 gezeigte Ventilelement 32 ist stempelartig mit einem sich entlang der axialen Richtung A erstreckenden Ventilelement-Basiskörper 40 ausgebildet, welcher entlang der axialen Richtung A in einen radial nach außen vorstehenden ersten axialen Endabschnitt 41 übergeht. Mittels des ersten axialen Endabschnitts 41, der in der Art eines Deckels wirkt, kann die erste Durchgangsöffnung 38 in dem in der Fig. 1 gezeigten geschlossenen Zustand des Ventilelements 32 fluiddicht verschlossen werden. Zum Öffnen des Bypass-Kanals 31 wird das Ventilelement 32 entlang der axialen Richtung A von der Gehäusedeckel-Leerlauföffnung 4 weg zum Filterelement 5 hin bewegt, so dass der erste axiale Endabschnitt 41 die erste Durchgangsöffnung 38 freigibt.

Damit nun das Ventilelement 32 in der Art eines Überdruckventils wirken kann, welches mittels des Bypass-Kanals 31 die Fluidverbindung zwischen der Rohseite 7 und der Reinseite 8 herstellt, wenn der in der Rohseite 7 auftretende Fluiddruck einen vorbestimmten Schwellwert überschreitet, kann im Hohlkörper 36 ein Federelement 39 vorgesehen sein, welche das Ventilelement 32 zur geschlossenen Position hin vorspannt. Zum Erzeugen einer solchen Vorspannung kann im Hohlkörper 36 ein axialer Anschlag 42 vorgesehen sein, an welchem sich das Federelement 39 zur Vorspannung des Ventilelements 32 einenends abstützt. Der axiale Anschlag 42 kann in Form eines in Umfangsrichtung der Zylinderwand 34 verlaufenden, radial nach innen abstehenden Vorsprungs ausgebildet sein; selbstverständlich sind in Varianten aber auch andere Realisierungsmöglichkeiten vorstellbar. Um das mittels des Federelements 39 zur geschlossenen Position hin vorgespannte Ventilelement 32 in die geöffnete Position zu bewegen, muss der Fluiddruck in der Rohseite 7 der Filtereinrichtung 1 den vorbestimmten Schwellwert überschreiten, so dass eine auf das Ventilelement 32 wirkende Gegenkraft erzeugt wird, welche die vom Federelement 39 erzeugte Vorspannkraft aufhebt. In diesem Fall wird das Ventilelement 32 in die geöffnete Position bewegt, so dass das Fluid über den Bypass-Kanal in die Reinseite 8 strömen kann und der Fluiddruck in der Rohseite reduziert wird.

Der Ventilelement-Basiskörper 40 kann entgegen der axialen Richtung A in einen zweiten axialen Endabschnitt 43 übergehen, in dessen Bereich ein Rastelement 44 vorgesehen ist, welches mit einem im Hohlkörper 33 vorgesehenen Abstützungsring 48 eine Einrasteinrichtung zum lösbaren Fixieren des Ventilelements 32 am Federelement 39 ausbildet. Zur Montage des Ventilelements 32 im Hohlkörper 33 kann das Rastelement 44 in den Abstützungsring 48 eingeclipst werden. Das Federelement 39 stützt sich zur Vorspannung des Ventilelements 32 also einenends am axialen Anschlag 42 und anderenends am Abstützungsring 48 ab, wobei der Abstützungsring 48 im Hohlkörper 33 entlang der axialen Richtung A bewegbar ist. Zum Abdichten des Bypass-Kanals 31 nach außen gegen die Umgebung kann dieser mittels eines zylinderartig ausgebildeten Bypasskanal-Verschlusselements 45 verschlossen werden.

Der Gehäusedeckel 3 kann einen die Gehäusedeckel-Leerlauföffnung 4 einfassenden und nach innen abstehenden Leerlauföffnungskragen 2 aufweisen.

Die Endscheibe 24 des Filterelements 5 kann entsprechend einen Öffnungskragen 26 mit einer Kragen-Innenfläche aufweisen, in welchen das Verschlusselement 9, insbesondere dessen Hohlkörper 36, im Bereich zwischen der ersten und zweiten Durchgangsöffnung 38, 37 axial zur Ausbildung der ersten Radialdichtung 12 eingreift. Mit anderen Worten, die in der Zylinderwand 34 vorgesehene zweite Durchgangsöffnung 37 ist in dem am Gehäuse 3 befestigten Zustand des Verschlusselements 9 in axialer Richtung A zwischen dem Öffnungskragen 26 und dem Leerlauföffnungskragen 2 angeordnet.

Optional kann das Verschlusselement 9 eine zweite Radial-Dichtung 16 aufweisen, mittels welcher das Verschlusselement 9 zusätzlich den Gehäuse-Innenraum, der sowohl die Rohseite 7 als auch die Reinseite 8 der Filtereinrichtung 1 umfasst, nach außen abdichtet.

Zur Verbesserung der Dichtungswirkung dieser zweiten Radial-Dichtung 16 kann das Verschlusselement 9 in analoger Weise zur ersten Radial-Dichtung 12 auf der Außenumfangsfläche eine zweite Ringnut 17 aufweisen, in welcher ein zweites ringförmiges Dichtungselement 18 angeordnet ist, wobei dann mittels der zweiten Radialdichtung 16 der Gehäuse-Innenraum des Filtergehäuses besonders gut nach außen abgedichtet wird.

Die Filtereinrichtung 1 kann sowohl eine Einlassöffnung zum Einlassen von ungefiltertem Öl als auch eine Auslassöffnung zum Auslassen von einem mittels der Filtereinrichtung 1 gefilterten Öl aufweisen. Diese können vorzugsweise in einem axial dem Verschlusselement 9 gegenüberliegendem Bereich der Filtereinrichtung 1 angeordnet sein und sind daher in der Darstellung der Fig. 1 nicht gezeigt. Eine solche Einlassöffnung kann dabei mit der Rohseite 7 der gefiltertes Öl durch die mit der Reinseite 8 der Filtereinrichtung 1 in Fluidverbindung stehende Auslassöffnung die Filtereinrichtung 1 wieder verlassen kann.

Um während eines Filtervorgangs in einem Bereich 21 der Rohseite 7 angesammeltes Schmutzöl und in dem Bereich 22 der Reinseite angesammeltes gefiltertes Öl zu Reinigungs- oder Wartungszwecken gleichzeitig der Filtereinrichtung 1 entnehmen zu können, wird das als Verschlussschraube ausgebildete Verschlusselement 9 aus dem Gehäusedeckel 3 geschraubt, so dass sowohl die erste als auch zweite Radial-Dichtung 12, 16 aus der Filtereinrichtung 1 entfernt wird. Dann steht sowohl die Rohseite 7 als auch die Reinseite 8 mit einer Außenumgebung der Filtereinrichtung 1 in Fluidverbindung, so dass in den Bereichen 21 und 22 angesammeltes ungefiltertes bzw. gefiltertes Öl aus der Filtereinrichtung 1 abgelassen werden kann.

Sobald ein solcher Reinigungs- und Wartungsvorgang der Filtereinrichtung 1 beendet ist, kann das Verschlusselement 9 einfach wieder durch Aufschrauben der Verschlussschraube in den Gehäusedeckel 3 an diesem befestigt werden, so dass die erste und zweite Radialdichtung 12, 16 wieder die gewünschte Dichtwirkung entfalten können.

Betrachtet man nun das Filterelement 5 gemäß der Figur 1, so erkennt man, dass dieses einen ringförmigen Filterkörper 23 aufweist, welcher an seinen beiden axialen Enden mittels einer ersten Endscheibe 24 und einer zweiten Endscheibe (in der Teilansicht der Fig. 1 nicht gezeigt) verschlossen ist. Die Filterelement-Leerlauföffnung 6 ist dabei in der ersten Endscheibe 24 konzentrisch zu dieser angeordnet, so dass die erste Endscheibe 24 ringförmig ausgebildet ist.

Das Filterelement 5 weist weiterhin ein Filterelement-Befestigungselement 25 in der Art eines Clip-Verschlusses auf, mittels welchem das Filterelement 5 an dem Gehäusedeckel 3 der Filtereinrichtung 1 lösbar befestigt werden kann. Hierzu weist der Gehäusedeckel 3 zur Ausbildung des Clip-Verschlusses ein zu dem Filterelement-Befestigungselement 25 komplementäres Gehäusedeckel-Befestigungselement 14 auf. Die Filterelement-Leerlauföffnung 6 des Filterelements 5 ist durch den nach innen in Richtung der (nicht gezeigten) zweiten Endscheibe abstehenden Öffnungskragen 26 eingefasst, wobei der Öffnungskragen 26 eine Kragen-Innenfläche aufweist, welche radial mit dem ersten ringförmigen Dichtungselement 13 zur Ausbildung der ersten Radialdichtung 12 in Kontakt stehen kann.

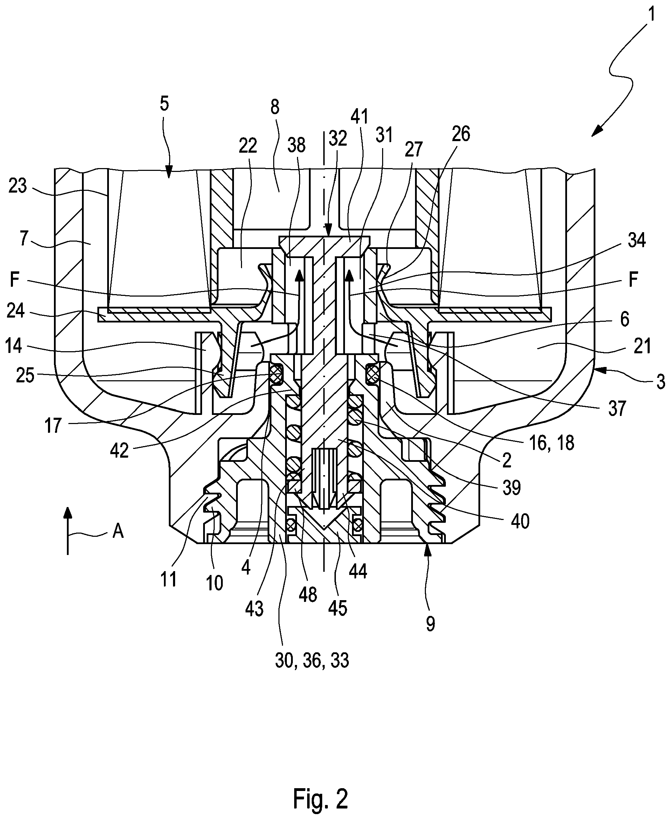

In einer in der Figur 2 gezeigten, vereinfachten Variante des Verschlusselements 9 der Figur 1 kann auf das erste ringförmige Dichtungselement verzichtet sein. In diesem Fall kann die erste Radial-Dichtung 12 zur Abdichtung der Rohseite 7 gegen die Reinseite 8 eine kreiszylindrische radiale Dichtkontur aufweisen auf. Zur Verbesserung der Dichtwirkung ist der Öffnungskragen 26 als Dichtlippe 27 ausgebildet, welche, wie in der Figur 2 gezeigt, nach innen in Richtung der zweiten Endscheibe von der ersten Endscheibe 24 absteht und am Hohlkörper 36 anliegt.

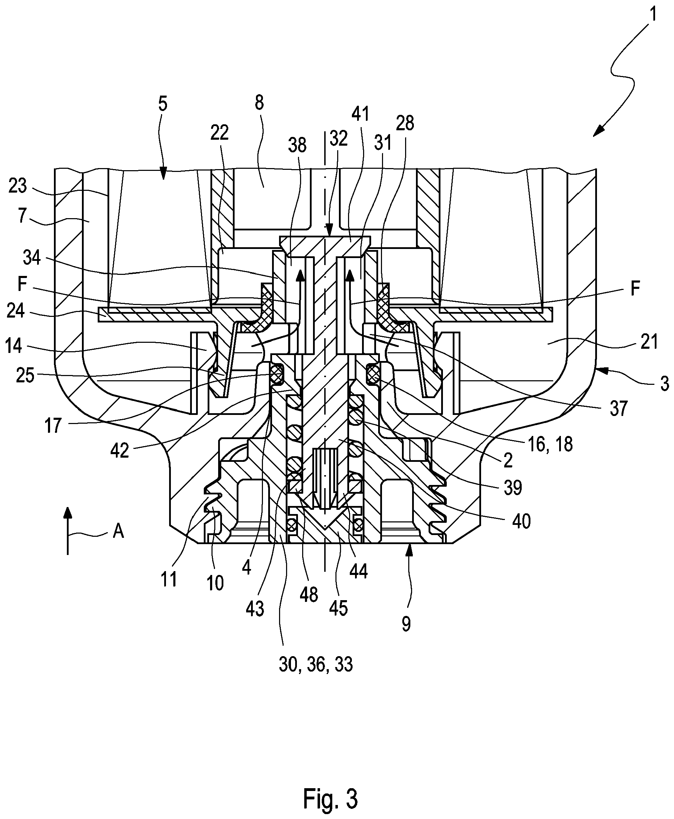

In einer weiteren Variante, die in der Figur 3 gezeigt ist, kann das Filterelement 5 anstelle eines Öffnungskragens ein ringförmiges Vlies-Element 28 aufweisen, welches an der ersten Endscheibe 24 des Filterelements 5 angeschweißt sein kann. Beim Einschrauben des Verschlusselements 9 in die Gehäusedeckel-Leerlauföffnung 4 wird das Vlies-Element 28 in die Filterelement-Leerlauföffnung 6 nach innen gedrückt (und dabei verformt; in der Figur 3 nicht gezeigt), so dass auf diese Weise die Rohseite 7 gegen die Reinseite 8 abgedichtet werden kann.

## Patentansprüche

1. Filtereinrichtung (1), insbesondere für ein Kraftfahrzeug,
- mit einem Filtergehäuse (2),
- mit einem am Filtergehäuse (2) befestigten Gehäusedeckel (3), welcher eine Gehäusedeckel-Leerlauföffnung (4) aufweist,
- mit einem mit dem Gehäusedeckel (3) verbindbaren oder verbundenen Filterelement (5), welches eine Filterelement-Leerlauföffnung (6) aufweist und in einem in dem Filtergehäuse (2) montierten Zustand im Filtergehäuse (2) eine Rohseite (7) von einer Reinseite (8) trennt,
- mit einem an dem Gehäusedeckel (3) anbringbaren oder angebrachten und einen Verschlusselement-Hauptkörper (30) aufweisenden Verschlusselement (9), welches in einem an dem Gehäusedeckel (3) angebrachten Zustand sowohl die Gehäusedeckel-Leerlauföffnung (4) als auch die Filterelement-Leerlauföffnung (6) verschließt,
- mit einem im Verschlusselement-Hauptkörper (30) vorgesehenen Bypass-Kanal (31), welcher in einem am Gehäusedeckel (3) angebrachten Zustand des Verschlusselements (9) die Rohseite (7) fluidisch mit der Reinseite (8) verbindet,
- mit einem im Verschlusselement-Hauptkörper (30) vorgesehenen Ventilelement (32), welches zwischen einer geschlossenen Position, in welcher es den Bypass-Kanal (31) fluiddicht verschließt, und einer geöffneten Position, in welcher es den Bypass-Kanal (31) zum Durchströmen mit einem Fluid freigibt, verstellbar ist,
- wobei das Filterelement (5) einen ringförmigen Filterkörper (23) umfasst, welcher an seinen beiden axialen Enden mittels einer ersten (24) und einer zweiten Endscheibe verschlossen ist,
- wobei die erste Endscheibe (24) die Filterelement-Leerlauföffnung (6) umfasst, wobei diese konzentrisch in der ersten Endscheibe (24) angeordnet ist, so dass die erste Endscheibe (24) ringförmig ausgebildet ist,
- **dadurch gekennzeichnet, dass** in einem vom Gehäusedeckel entfernten Zustand des Verschlusselementes sowohl die Gehäusedeckel-Leerlauföffnung als auch die Filterelement-Leerlauföffnung freigegeben ist, und damit sowohl die Rohseite als auch die Reinseite nach außen geöffnet ist, und dass an der ersten Endscheibe (24) ein von dieser abstehendes Filterelement-Befestigungselement (25) vorgesehen ist, welches in ein am Gehäusedeckel (3) befestigten Zustand in ein am Gehäusedeckel (3) vorgesehenes komplementäres und nach innen abstehendes Gehäusedeckel-Befestigungselement (14) eingreift.

2. Filtereinrichtung (1) nach Anspruch 1,
**dadurch gekennzeichnet, dass**
- der Verschlusselement-Hauptkörper (30) als Hohlkörper (36) ausgebildet ist, in welchem der Bypass-Kanal (31) vorgesehen ist,
- das Ventilelement (32) zum Verstellen zwischen der geöffneten und der geschlossenen Position entlang einer axialen Richtung (A) des Hohlkörpers (36) in diesem verschiebbar ist.

3. Filtereinrichtung (1) nach Anspruch 2,
**dadurch gekennzeichnet, dass**
- im Hohlkörper (36) eine erste Durchgangsöffnung (38) vorgesehen ist, welche in dem am Gehäusedeckel (3) angebrachten Zustand des Verschlusselements (9) den Bypass-Kanal (31) fluidisch mit der Reinseite (8) verbindet,
- in dem Hohlkörper (36) eine zweite Durchgangsöffnung (37) vorgesehen ist, welche in dem am Gehäusedeckel (3) angebrachten Zustand des Verschlusselements (9) die Rohseite (7) fluidisch mit dem Bypass-Kanal (31) verbindet.

4. Filtereinrichtung (1) nach Anspruch 3,
**dadurch gekennzeichnet, dass**
- der Hohlkörper (36) als Hohlzylinder (33) ausgebildet ist,
- die erste Durchgangsöffnung (38) an einem ersten axialen Ende des Hohlzylinders (33) vorgesehen ist,
- der Hohlzylinder (33) eine Zylinderwand (34) umfasst, wobei die zweite Durchgangsöffnung (37) in der Zylinderwand (34) vorgesehen ist.

5. Filtereinrichtung (1) nach einem der vorhergehenden Ansprüche,
**dadurch gekennzeichnet, dass**
- der Gehäusedeckel (3) einen die Gehäusedeckel-Leerlauföffnung (4) einfassenden und nach innen abstehenden Leerlauföffnungskragen (2) aufweist,
- am Verschlusselement-Hauptkörper (30) eine erste Radial-Dichtung (12) vorgesehen ist, mittels welcher das Verschlusselement (9) in dem an dem Gehäusedeckel (3) angebrachten Zustand in der Filterelement-Leerlauföffnung (6) die Rohseite (7) gegen die Reinseite (8) abdichtet,
- die erste Endscheibe (24) einen Öffnungskragen (26) mit einer Kragen-Innenfläche aufweist, in welchen das Verschlusselement (9) im Bereich zwischen der ersten und zweiten Durchgangsöffnung (38, 37) in dem am Gehäusedeckel (3) angebrachten Zustand axial zur Ausbildung der ersten Radial-Dichtung (12) eingreift,
- die in der Zylinderwand (34) vorgesehene zweite Durchgangsöffnung (37) in dem am Gehäusedeckel (3) befestigten Zustand des Verschlusselements (9) in axialer Richtung (A) zwischen dem Öffnungskragen (26) und dem Leerlauföffnungskragen (2) angeordnet ist.

6. Filtereinrichtung (1) nach Anspruch 5,
**dadurch gekennzeichnet, dass**
- die erste Radial-Dichtung (12) des Verschlusselements (9) ein auf einer Außenumfangsfläche des Verschlusselements (9) in einer ersten Ringnut (15) angeordnetes erstes ringförmiges Dichtungselement (13) aufweist, mittels welchem die erste Radial-Dichtung (12) in dem an dem Gehäusedeckel (3) angebrachten Zustand des Verschlusselements (9) in der Filterelement-Leerlauföffnung (6) die Rohseite (7) gegen die Reinseite (8) abdichtet, oder dass
- der Öffnungskragen (26) als Dichtlippe (27) ausgebildet ist, oder dass
- an der ersten Endscheibe (24) ein ringförmiges Vlieselement (28) angebracht, insbesondere angeschweißt, ist, an welchem die Außenumfangsfläche des Verschlusselements (9) in dem an dem Gehäusedeckel (3) angebrachten Zustand zur Ausbildung der ersten Radial-Dichtung (12) anliegt.

7. Filtereinrichtung (1) nach einem der Ansprüche 3 bis 6,
**dadurch gekennzeichnet, dass**
- das Ventilelement (32) stempelartig mit einem sich entlang einer axialen Richtung (A) erstreckenden Ventilelement-Basiskörper (40) ausgebildet ist,
- der Ventilelement-Basiskörper (40) entlang der axialen Richtung (A) in einen radial nach außen vorstehenden ersten axialen Endabschnitt (41) übergeht, welcher die erste Durchgangsöffnung (38) im geschlossenen Zustand des Ventilelements (32) fluiddicht verschließt.

8. Filtereinrichtung (1) nach einem der Ansprüche 2 bis 7,
**dadurch gekennzeichnet, dass**
im Hohlkörper (36) ein Federelement (38) vorgesehen ist, welches das Ventilelement (32) zur geschlossenen Position hin vorspannt.

9. Filtereinrichtung (1) nach Anspruch 8,
**dadurch gekennzeichnet, dass**
im Hohlkörper (36) ein axialer Anschlag (42) vorgesehen ist, an welchem sich das Federelement (38) zur Vorspannung des Ventilelements (32) einenends abstützt.

10. Filtereinrichtung (1) nach einem der Ansprüche 7 bis 9,
**dadurch gekennzeichnet, dass**
- der Ventilelement-Basiskörper (40) entgegen der axialen Richtung (A) in einen zweiten axialen Endabschnitt (43) übergeht, in dessen Bereich ein Rastelement (44) vorgesehen ist, welches mit einem im Hohlkörper (33) vorgesehenen Abstützungsring (48) eine Einrasteinrichtung zum lösbaren Fixieren des Ventilelements (32) am Federelement (39) ausbildet,
- sich das Federelement (39) anderenends zur Vorspannung des Ventilelements (32) am Abstützungsring (48) abstützt.

11. Kraftfahrzeug mit einer Filtereinrichtung (1) nach einem der vorhergehenden Ansprüche.

## Claims

1. Filter device (1) in particular for an automotive car,
- with a filter housing (2),
- with a housing cover (3) fastened on the filter housing (2), which has a housing cover idle opening (4),
- with a filter element (5) which can be connected or is connected with the housing cover (3), which filter element has a filter element idle opening (6) and in a condition of being mounted in the filter housing (2) separates a dirty side (7) from a clean side (8) in the filter housing (2),
- with a sealing element (9) which can be attached to or is attached to the housing cover (3) and which has a sealing element main body (30), which sealing element in a condition of being attached on the housing cover (3) closes both the housing cover idle opening (4) and the filter element idle opening (6),
- with a bypass channel (31) provided in the sealing element main body (30), which bypass channel in a condition of the sealing element (9) being attached to the housing cover (3) connects the dirty side (7) fluidically with the clean side (8),
- with a valve element (32) provided in the sealing element main body (30), which valve element can be adjusted between a closed position, in which it seals the bypass channel (31) in a fluid-tight manner, and an opened position, in which it releases the bypass channel (31) for the flow-through of a fluid,
- wherein the filter element (5) comprises an annular filter body (23) which at its two axial ends is closed by means of a first (24) and a second end disc,
- wherein the first end disc (24) comprises the filter element idle opening (6), wherein this is disposed concentrically in the first end disc (24) such that the first end disc (24) is formed in a ring-shape,
- **characterised in that**, in a condition of the sealing element being removed from the housing cover, both the housing cover idle opening and the filter element idle opening are released, and as a result both the dirty side and the clean side are open to the outside, and that, at the first end disc (24) is provided a filter element fastening element (25) which, in a condition of being fastened on the housing cover (3), engages in a complimentary and inwardly-protruding housing cover fastening element (14) provided on the housing cover (3).

2. Filter device (1) according to claim 1,
**characterised in that**
- the sealing element main body (30) is formed as a hollow body (36) in which the bypass channel (31) is provided,
- the valve element (32) for adjusting between the opened and the closed position along an axial direction (A) of the hollow body (36) can be displaced therein.

3. Filter device (1) according to claim 2,
**characterised in that**
- in the hollow body (36) is provided a first through-opening (38), which, in a condition of the sealing element (9) being attached on the housing cover (3), connects the bypass channel (31) fluidically with the clean side (8),
- in the hollow body (36) is provided a second through-opening (37), which in the condition of the sealing element (9) being attached on the housing cover (3) connects the dirty side (7) fluidically with the bypass channel (31).

4. Filter device (1) according to claim 3,
**characterised in that**
- the hollow body (36) is in the form of a hollow cylinder (33),
- the first through-opening (38) is provided on a first axial end of the hollow cylinder (33),
- the hollow cylinder (33) comprises a cylinder wall (34), wherein the second through-opening (37) is provided in the cylinder wall (34).

5. Filter device (1) according to any of the preceding claims,
**characterised in that**
- the housing cover (3) has an idle opening collar (2) enclosing the housing cover idle opening (4) and protruding inwardly,
- on the sealing element main body (30) is provided a first radial seal (12), by means of which the sealing element (9), in the condition of being attached on the housing cover (3), seals the dirty side (7) against the clean side (8) in the filter element idle opening (6),
- the first end disc (24) has an opening collar (26) with a collar inner surface, into which opening collar the sealing element (9) engages in the region between the first and second through-opening (38, 37), in the condition of being mounted on the housing cover (3), in an axial manner for forming the first radial seal (12),
- the second through-opening (37) provided in the cylinder wall (34) in the condition of the sealing element (9) being fastened on the housing cover (3) is disposed in axial direction (A) between the opening collar (26) and the idle opening collar (2).

6. Filter device (1) according to claim 5,
**characterised in that**
- the first radial seal (12) of the sealing element (9) has a first annular sealing element (13) disposed on an outer circumferential surface of the sealing element (9) in a first annular groove (15), by means of which first annular sealing element the first radial seal (12), in the condition of the sealing element (9) being mounted on the housing cover (3), seals the dirty side (7) against the clean side (8) in the filter element idle opening (6), or that
- the opening collar (26) is in the form of a sealing lip (27), or that
- on the first end disc (24) is mounted, in particular welded-on, an annular nonwoven fabric element (28), on which the outer circumferential surface of the sealing element (9) abuts, in the condition of being mounted on the housing cover (3), for the formation of the first radial seal (12).

7. Filter device (1) according to any of claims 3 to 6,
**characterised in that**
- the valve element (32) is formed like a stamper having a valve element basic body (40) extending along an axial direction (A),
- the valve element basic body (40) transitions along the radial direction (A) into a first axial end portion (41) protruding radially outwards, which seals in a fluid-tight manner the first through-opening (38) in the closed condition of the valve element (32).

8. Filter device (1) according to any of claims 2 to 7,
**characterised in that**
in the hollow body (36) is provided a spring element (38) which preloads the valve element (32) towards the closed position.

9. Filter device (1) according to claim 8,
**characterised in that**
in the hollow body (36) is provided an axial stop (42), on which the spring element (38) is supported for the preloading of the valve element (32) at one end.

10. Filter device (1) according to any of claims 7 to 9,
**characterised in that**
- the valve element basic body (40) transitions against the axial direction (A) into a second axial end portion (43), in the region of which is provided a latching element (44) which forms with a supporting ring (48) provided in the hollow body (33) a latching device for the releasable fixing of the valve element (32) on the spring element (39),
- the spring element (39) is supported on the other end on the supporting ring (48) for the preloading of the valve element (32).

11. Automotive car having a filter device (1) according to any of the preceding claims.

## Revendications

1. Dispositif de filtre (1), en particulier pour un véhicule automobile,
- avec un boîtier de filtre (2),
- avec un couvercle de logement de filtre (3) qui est fixé au boîtier de filtre (2) et qui présente un orifice de vidange de couvercle de logement de filtre (4),
- avec un élément de filtre (5) qui est ou peut être relié au couvercle de logement de filtre (3) et qui présente un orifice de vidange d'élément de filtre (6), et sépare dans le boîtier de filtre (2), à l'état monté dans le boîtier de filtre (2), un côté produit brut (7) d'un côté produit pur (8),
- avec un élément de fermeture (9) qui est ou peut être placé au niveau du couvercle de logement de filtre (3) et présente un corps principal d'élément de fermeture (30) et qui ferme, à l'état placé au niveau du couvercle de logement de filtre (3), aussi bien l'orifice de vidange de couvercle de logement de filtre (4) que l'orifice de vidange d'élément de filtre (6),
- avec un canal de dérivation (31) qui est prévu dans le corps principal d'élément de fermeture (30) et qui, lorsque l'élément de fermeture (9) est placé au niveau du couvercle de logement de filtre (3), relie pour les fluides le côté produit brut (7) et le côté produit pur (8),
- avec un élément de soupape (32) qui est prévu dans le corps principal d'élément de fermeture (30) et qui peut être déplacé entre une position fermée dans laquelle il ferme de manière étanche aux fluides le canal de dérivation (31), et une position ouverte dans laquelle il libère le canal de dérivation (31) en vue du passage d'un fluide,
- dans lequel l'élément de filtre (5) comprend un corps de filtre (23) annulaire qui est fermé au niveau de ses deux extrémités axiales au moyen d'un premier (24) et d'un deuxième disque d'extrémité,
- dans lequel le premier disque d'extrémité (24) comprend l'orifice de vidange d'élément de filtre (6), lequel est agencé de manière concentrique dans le premier disque d'extrémité (24) de telle sorte que le premier disque d'extrémité (24) est réalisé en forme d'anneau,
- **caractérisé en ce que**, lorsque l'élément de fermeture est éloigné du couvercle de logement de filtre, aussi bien l'orifice de vidange de couvercle de logement de filtre que l'orifice de vidange d'élément de filtre sont libérés, et par conséquent, aussi bien le côté produit brut que le côté produit pur sont ouverts vers l'extérieur et **en ce qu'**il est prévu au niveau du premier disque d'extrémité (24) un élément de fixation d'élément de filtre (25) qui dépasse dudit premier disque d'extrémité et qui, à l'état fixé au couvercle de logement de filtre (3), pénètre dans un élément de fixation de couvercle de logement de filtre (14) complémentaire prévu au niveau du couvercle de logement de filtre (3) et dépassant vers l'intérieur.

2. Dispositif de filtre (1) selon la revendication 1,
**caractérisé en ce que**
- le corps principal d'élément de fermeture (30) est réalisé sous forme de corps creux (36) dans lequel le canal de dérivation (31) est prévu,
- en vue du déplacement entre la position ouverte et la position fermée, l'élément de soupape (32) peut être déplacé en translation le long d'une direction axiale (A) du corps creux (36) dans celui-ci.

3. Dispositif de filtre (1) selon la revendication 2,
**caractérisé en ce que**
- il est prévu dans le corps creux (36) une première ouverture de passage (38) qui, lorsque l'élément de fermeture (9) est placé au niveau du couvercle de logement de filtre (3), relie pour les fluides le canal de dérivation (31) au côté produit pur (8),
- il est prévu dans le corps creux (36) une deuxième ouverture de passage (37) qui, lorsque l'élément de fermeture (9) est placé au niveau du couvercle de logement de filtre (3), relie pour les fluides le côté produit brut (7) au canal de dérivation (31).

4. Dispositif de filtre (1) selon la revendication 3,
**caractérisé en ce que**
- le corps creux (36) est réalisé sous forme de cylindre creux (33),
- la première ouverture de passage (38) est prévue au niveau d'une première extrémité axiale du cylindre creux (33),
- le cylindre creux (33) comprend une paroi de cylindre (34), la deuxième ouverture de passage (37) étant prévue dans la paroi de cylindre (34).

5. Dispositif de filtre (1) selon l'une quelconque des revendications précédentes,
**caractérisé en ce que**
- le couvercle de logement de filtre (3) présente un collet d'orifice de vidange (2) bordant l'orifice de vidange de couvercle de logement de filtre (4) et dépassant vers l'intérieur,
- il est prévu au niveau du corps principal d'élément de fermeture (30) un premier joint d'étanchéité radial (12) au moyen duquel l'élément de fermeture (9) à l'état placé au niveau du couvercle de logement de filtre (3) rend étanche le côté produit brut (7) par rapport au côté produit pur (8) dans l'orifice de vidange d'élément de filtre (6),
- le premier disque d'extrémité (24) présente un collet d'orifice (26) avec une surface intérieure de collet dans lequel pénètre de façon axiale l'élément de fermeture (9) dans la zone entre la première et la deuxième ouverture de passage (38, 37), lorsqu'il est placé au niveau du couvercle de logement de filtre (3), en vue de la réalisation du premier joint d'étanchéité radial (12),
- lorsque l'élément de fermeture (9) est fixé au couvercle de logement de filtre (3), la deuxième ouverture de passage (37) prévue dans la paroi de cylindre (34) est agencée dans la direction axiale (A) entre le collet d'orifice (26) et le collet d'orifice de vidange (2).

6. Dispositif de filtre (1) selon la revendication 5,
**caractérisé en ce que**
- le premier joint d'étanchéité radial (12) de l'élément de fermeture (9) présente un premier élément d'étanchéité annulaire (13) agencé dans une première rainure annulaire (15) sur une surface périphérique extérieure de l'élément de fermeture (9), élément d'étanchéité au moyen duquel le premier joint d'étanchéité radial (12), lorsque l'élément de fermeture (9) est placé au niveau du couvercle de logement de filtre (3), rend étanche le côté produit brut (7) par rapport au côté produit pur (8) dans l'orifice de vidange d'élément de filtre (6), ou **en ce que**
- le collet d'orifice (26) est réalisé sous forme de lèvre d'étanchéité (27), ou **en ce que**
- un élément en non-tissé annulaire (28) est placé, en particulier soudé, au niveau du premier disque d'extrémité (24), élément en non-tissé auquel s'appuie la surface périphérique extérieure de l'élément de fermeture (9), lorsqu'il est placé au niveau du couvercle de logement de filtre (3), en vue de la réalisation du premier joint d'étanchéité radial (12).

7. Dispositif de filtre (1) selon l'une quelconque des revendications 3 à 6,
**caractérisé en ce que**
- l'élément de soupape (32) est réalisé à la manière d'un piston avec un corps de base d'élément de soupape (40) s'étendant le long d'une direction axiale (A),
- le corps de base d'élément de soupape (40) se transforme le long de la direction axiale (A) en un premier tronçon terminal axial (41) qui dépasse de façon radiale vers l'extérieur et qui ferme de manière étanche aux fluides la première ouverture de passage (38) lorsque l'élément de soupape (32) est à l'état fermé.

8. Dispositif de filtre (1) selon l'une quelconque des revendications 2 à 7,
**caractérisé en ce**
**qu'**il est prévu dans le corps creux (36) un élément ressort (38) qui contraint l'élément de soupape (32) jusque dans la position fermée.

9. Dispositif de filtre (1) selon la revendication 8,
**caractérisé en ce**
**qu'**il est prévu dans le corps creux (36) une butée axiale (42) à laquelle s'appuie par une extrémité l'élément ressort (38) en vue de la précontrainte de l'élément de soupape (32).

10. Dispositif de filtre (1) selon l'une quelconque des revendications 7 à 9,
**caractérisé en ce que**
- le corps de base d'élément de soupape (40) se transforme à l'opposé de la direction axiale (A) en un deuxième tronçon terminal axial (43) dans la zone duquel est prévu un élément d'enclenchement (44) qui réalise avec un anneau de soutien (48) prévu dans le corps creux (33) un dispositif d'enclenchement destiné à la fixation amovible de l'élément de soupape (32) au niveau de l'élément ressort (39),
- l'élément ressort (39) s'appuie par une autre extrémité à l'anneau de soutien (48) en vue de la précontrainte de l'élément de soupape (32).

11. Véhicule automobile avec un dispositif de filtre (1) selon l'une quelconque des revendications précédentes.
